# EUROPEAN PATENT APPLICATION

(11) **EP 2 918 369 A1**
(43) Date of publication of application: **16.09.2015**
(21) Application number: 14000931.7
(22) Date of filing: 14.03.2014
(51) Int. Cl.: B23K 26/38, B23K 26/14

(54) **Method for laser-beam gas cutting**

(71) Applicant: Linde Aktiengesellschaft, 80331 München (DE)
(72) Inventor: Scholz, Jürgen, 81379 München (DE); Fieret, Jim, Dr., Bell Hill, Hook Norton OX15 5PS (GB)

(57) **Abstract**

The invention relates to a method for laser-beam gas cutting of a workpiece by means of generating a kerf (10b) in the workpiece using a focused laser-beam (2), a first assist gas jet (12a) surrounding the laser-beam (2) being provided together with a second assist gas jet (14a) surrounding the first assist gas jet (12a), wherein the second assist gas jet (14a) is at least partly combusted in the kerf (10b) during cutting of the workpiece.

## Description

### Technical field

The invention concerns a method for laser-beam gas cutting of a workpiece with a focused laser-beam.

Laser cutting of metal workpieces, for example made of steel, utilizing an assist gas for blowing molten metal through a kerf generated during cutting is known. Oxygen is most commonly used as assist gas when cutting ferrous metal workpeices. Inert gases can also be used, especially to produce oxide-free cut edges.

Cutting characteristics of a cut provided by a laser-beam device are governed by various operational conditions, for example the power of the laser-beam used, the distance between the surface of the workpiece and the laser-beam nozzle and the composition of the assist gas.

For laser cutting applications using diode, fibre or disc lasers, the quality of cutting deteriorates when cutting sheet metal layers of 3-4 mm or more. Here, it becomes noticeable that the cutting front of such lasers is relatively flat, which has a negative influence on the cutting quality.

Using CO2 lasers, thicker sheet metal workpieces can be cut, which provide acceptable cutting quality. However, CO2 lasers also have disadvantages compared to other cutting methods, for example plasma cutting.

US 2010/0187209 A1 discloses a laser machining nozzle providing a main assist gas nozzle for emitting a laser-beam and a main assist gas, and an auxiliary assist gas nozzle surrounding the main assist gas nozzle for emitting an auxiliary assist gas. The teaching of this document is related to optimization of flow velocity of main assist gas and auxiliary assist gas with a view to cooling and shielding the cutting laser from the ambient atmosphere. The same gas is used as main assist gas and auxiliary assist gas.

It is an object of the present invention to enhance cutting quality in laser cutting applications, especially using diode lasers, fibre lasers, disc lasers or CO2 lasers.

This object is achieved by providing a method including the features of claim 1.

Advantageous embodiments of the invention are the subject matter of the dependent claims.

By providing a first assist gas jet surrounding the cutting laser-beam and a second assist gas jet surrounding the first assist gas beam, the second assist gas jet being combusted in the kerf during cutting of the workpiece, a superior cutting quality for workpieces, especially for metal sheet workpieces, can be achieved.

For example, when using a diode, fibre or disc laser in accordance with the present invention, sheet metal thicknesses of substantially more than 3-4 mm can be cut with sufficient quality. Correspondingly, when using CO2 lasers in accordance with the present invention, hitherto achievable sufficient cutting qualities can be achieved for higher workpiece or sheet metal thicknesses.

Advantageously, the second assist gas jet comprises or consists of a fuel gas, which is ingited in the kerf. Advantageously usable fuel gases comprise at least one of the following: hydrogen, propene, butane, methane, acetylene, as well as mixtures of these, as for example natural gas.

In case a fuel gas mixture, i. e. a gas comprising a fuel gas together with other non-fuel gases, shall be used, one of said fuel gases can be mixed for example with oxygen. In case of using hydrogen as fuel gas, an inert gas such as argon or nitrogen can advantageously be added.

It is also advantageously possible that the second assist gas jet comprises or consists of a gas or gas mixture which is combustible with ambient oxygen in the kerf. Advantageously usable fuel gases comprise at least one of the following: hydrogen, propene, butane, methane, acetylene, as well as mixtures of these, as for example natural gas.

Further advantageous embodiments of the invention will now be described with reference to the accompanying drawings.

### Brief description of the drawings

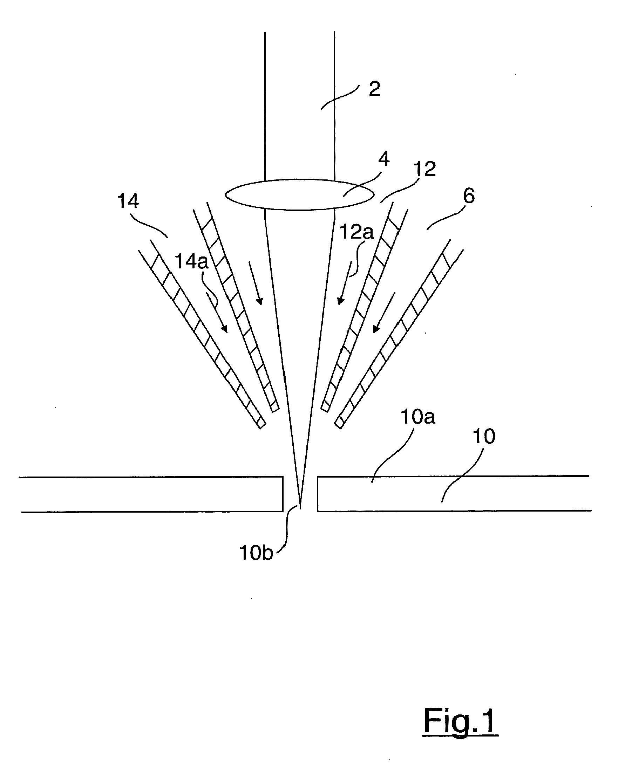

Figure 1 is a schematically simplified section-diagram showing a laser cutting nozzle, through which a laser-beam is applied to a sheet metal work piece.

In figure 1, a laser-beam for cutting a workpiece 10 is designated 2. Laser-beam 2 is focused onto the surface or slighty below the surface 10a of workpiece 10 by means of a focusing lense 4.

By means of the laser-beam 2 interacting with the workpiece 10, a kerf 10b is created. Depending on the type of laser cutting, kerf 10b can be provided e. g. as a groove, a slit or a notch, or, as in many practical applications, as a cut extending through the thickness of the workpiece. The kerf is typically dependent upon the properties of the workpiece being cut, the workpiece thickness, the focal length of lense 4, as well as the type of cutting gas used together with the laser 2, as will be explained in the following.

The laser-beam 2 is guided towards the workpiece 10 through a first duct 12 of nozzle 6. A first assist gas jet 12a is also directed though first duct 12 onto workpiece 10. First duct 12 is arranged so that the first assist gas jet essentially surrounds the focused laser-beam 2, especially in the vicinity of surface 10a and kerf 10b of the workpiece 10.

By means of interaction of the laser-beam 2 with the workpiece 10 in the cutting area, i. e. kerf 10b, the material, of which the workpiece is made, is heated to melting point. The first assist gas jet 12a provides a high-pressure gas to blow this molten material from the cutting area, whereby the kerf is cleared from monten material and the power requirement for laser-beam 2 is greatly decreased, as there is no need to raise the temperature of the (molten) material any further.

The first assist gas jet 12a typically comprises an inert gas such as nitrogen. Usage of nitrogen as first assist gas jet provides an excellent cut quality, as the cutting region can be effectively shielded from ambient gases such as oxygene, so that for example oxides cannot attach to the cut edge, whereby a bright, oxide free edge for kerf 10b can be provided.

Depending on specific requirements, the laser-beams will be moved relative to the workpiece 10, for example to cut a grove or a slit. If cutting of a notch is desired, there will be no relative movement between laser-beam 2 and workpiece 10 during cutting.

The roughness of the kerf 10b provided by laser cutting increases with thickness of the workpiece, but decreases with laser power and cutting speed.

In order to improve roughness qualities, i. e. especially in case of cutting sheet metal workpieces 10 with increased thicknesses, especially over 3-4 mm, there is provided a second duct 14 within nozzle 6, by means of which a second assist gas jet 14a is transported to the cutting area in the vicinity of kerf 10b. The second duct 14 is arranged such that the second assist gas jet 14a concentrically surrounds the first assist gas jet 12a.

This second assist gas jet 14a comprises a gas or gas mixture which is combustible within kerf 10b. Thus, the second assist gas jet can comprise a fuel gas, such as hydrogen, propane, butane, methane, acetylene or a corresponding mixture, for example natural gas. Such fuel gases are ignited within the kerf 10b by means of the heat created therein by laser-beam 2. Additional ignition means are also conceivable.

Depending on the extent of desired combustion within kerf 10b, a second, non-combustible component can be added to the gas of the second assist gas jet 14a. For example, such additional gases can comprise oxygene. In case hydrogen is used as fuel gas, an inert gas such as argon or nitrogen can be added.

It is also possible to provide the second assist gas jet with a gas or gas mixture which is combustible with ambient air. Such fuel gases are ignited within the kerf 10b by means of the heat created therein by laser-beam 2. Additional ignition means are also conceivable.

By providing a combustion reaction for the gas of the second assist gas jet 14a within kerf 10b, a melt-shear removal efficiency of the assist gas system can be significantly increased, which leads to an increased flow rate of the assist gas. Especially, the fuel gas will ignite as it reaches the hot section of kerf 10b, whereby it will produce additional heat, which will also expand the assist gas of the first assist gas jet, whereby flow velocity is increased. This increased flow velocity leads to a significant improvement of melt-shear removal, which in turn provides reduced roughness for the cutting area (kerf) and can also make possible increased cutting speeds.

Advantageously, the second assist gas jet 14a is directed towards the kerf 10b in such a way that it is focused behind the first assist gas jet 12a, which it concentrically surrounds. This can be achieved by using a seperat nozzle behind the nozzle for the first gas jet.

## Claims

1. Method for laser-beam gas cutting of a workpiece by means of generating a kerf (10b) in the workpiece using a focused laser-beam (2), a first assist gas jet (12a) surrounding the laser-beam (2) being provided together with a second assist gas jet (14a) surrounding the first assist gas jet (12a),
**characterized in that** the second assist gas jet (14a) is at least partly combusted in the kerf (10b) during cutting of the workpiece.

2. Method according to claim 1, wherein the laser-beam (2) is provided by means of a diode laser, a fibre laser, a disc laser or a CO2 laser.

3. Method according to claim 1 or claim 2, wherein the second assist gas jet (14a) comprises or consists of a fuel gas.

4. Method according to claim 1 or claim 2, wherein the second assist gas jet (14a) comprises or consists of a gas or gas mixture which is combustible with ambient oxygen in the kerf (10b).

5. Method according to any one of the preceding claims, wherein the first assist gas jet (12a) comprises or consists of an inert gas.

6. Method according to any one of claims 3 to 5, wherein the fuel gas comprises at least one of the following gases: hydrogen, propane, butane, methane, acetylene or mixtures thereof such as natural gas.
